# EUROPÄISCHE PATENTANMELDUNG

(11) **EP 4 434 322 A1**
(43) Veröffentlichungstag der Anmeldung: **25.09.2024**
(21) Anmeldenummer: 24161260.5
(22) Anmeldetag: 04.03.2024
(51) Int. Cl.: A01D 78/10, A01D 78/12, B60S 1/68, B60B 33/00

(54) **HEUWERBUNGSMASCHINE**

(30) Priorität: 08.03.2023 DE 102023105777
(71) Anmelder: CLAAS Saulgau GmbH, 88348 Bad Saulgau (DE)
(72) Erfinder: Neiss, Marco, 88518 Marbach (DE); Frick, Clemens, 88356 Ostrach (DE)

(57) **Zusammenfassung**

Heuwerbungsmaschine, mit Rädern, nämlich zumindest mit Tast- und Stützrädern (13) von Rechkreiseln (10), wobei mindestens einem Rad (13) ein Abstreifelement (14) zugeordnet ist, welches einen Abstreifabschnitt (15) aufweist, der in Drehrichtung des Rades (13) vor einer Engstelle angeordnet ist, an welcher sich das Rad (13) bzw. der Reifen (17) mit geringem Abstand vorbeidreht. Fig. 1

## Beschreibung

Die Erfindung betrifft eine Heuwerbungsmaschine nach dem Oberbegriff des Anspruchs 1.

Aus der Praxis sind Heuwerbungsmaschinen hinlänglich bekannt. So sind als Schwader sowie als Wender ausgebildete Heuwerbungsmaschinen bekannt.

Aus DE 10 2007 035 407 A1 ist eine Heuwerbungsmaschine mit einem Grundgestell, mit einem Fahrwerk und mit Rechkreiseln bekannt. Das Grundgestell verfügt über einen Längsholm, der über eine Kupplungseinrichtung an ein Zugfahrzeug ankoppelbar ist. Das Fahrwerk verfügt über Laufräder. Das Grundgestell stützt sich über den Längsholm am Fahrwerk ab. Die Rechkreisel sind am Maschinengestell mittels eines Auslegearms schwenkbar bzw. klappbar angelenkt. So kann der jeweilige Rechkreisel zwischen einer Arbeitsstellung und einer Transportstellung verlagert werden. Jeder Rechkreisel der Heuwerbungsmaschine stützt sich in seiner Arbeitsstellung über Tast- und Stützräder auf dem zu bearbeitenden Untergrund ab.

Aus der Praxis sind auch Heuwerbungsmaschinen bekannt, die über kein separates Fahrwerk mit Laufrädern verfügen, sondern lediglich über Tast- und Stützräder.

Bei aus der Praxis bekannten Heuwerbungsmaschinen besteht das Problem, dass sich im Bereich eines Rades, insbesondere an dessen Lauffläche, Erntegut ansammeln bzw. anhaften und so das Rad verunreinigen kann. Das angesammelte oder anhaftende Erntegut kann sich insbesondere an Positionen, an welchen sich das Rad bzw. der Reifen mit einem geringen Abstand an einer Radaufhängung oder einer Halterung oder ähnlichem vorbeidreht, verklemmen und das jeweilige Rad bremsen oder blockieren. Um dem entgegenzuwirken, sind aus der Praxis an Rädern zusätzliche Abdeckelemente verbaut, die dem Ansammeln von Erntegut und demnach dem Aufbau von Verunreinigungen an einem Rad entgegenwirken sollen. Trotz solcher Abdeckelemente lässt es sich jedoch bislang nicht vermeiden, dass sich Erntegut an einem Rad sammelt. Es besteht Bedarf an einer Heuwerbungsmaschine, bei welcher die Gefahr, dass sich an einem Rad Erntegut ansammelt oder anhaftet, verringert ist.

Hiervon ausgehend liegt der vorliegenden Erfindung die Aufgabe zugrunde, eine neuartige Heuwerbungsmaschine zu schaffen.

Diese Aufgabe wird durch eine Heuwerbungsmaschine nach Anspruch 1 gelöst.

Erfindungsgemäß ist mindestens einem Rad ein Abstreifelement zugeordnet, welches einen Abstreifabschnitt aufweist, der sich in Drehrichtung des Rades vor einer Engstelle angeordnet ist, an welcher sich das Rad bzw. der Reifen mit geringem Abstand vorbeidreht. Sollte an einem Rad Erntegut anhaften, so kann dieses mithilfe des dem Rad zugeordneten Abstreifelements vom Rad abgestreift werden. Hierdurch kann vermieden werden, dass sich das anhaftende Erntegut an der Engstelle verklemmt und das jeweilige Rad blockiert.

Vorzugsweise ist der Abstreifabschnitt in Fahrtrichtung der Heuwerbungsmaschine gesehen hinter dem jeweiligen Rad, nämlich hinter einer Lauffläche eines Reifens des jeweiligen Rades, angeordnet.

Der Abstreifabschnitt des Abstreifelements erstreckt sich mit Abstand zur Lauffläche des jeweiligen Rades und weist eine untere Kante und eine obere Kante auf, wobei ein Abstand der unteren Kante des Abstreifabschnitts von der Lauffläche des Reifens des jeweiligen Rades kleiner ist als ein Abstand der oberen Kante des Abstreifabschnitts von der Lauffläche des Reifens des jeweiligen Rades. Dies ist besonders bevorzugt, um an einer Lauffläche des Rades anhaftendes Erntegut im Bereich der unteren Kante des Abstreifabschnitts des Abstreifelements von der Lauffläche des Reifens zuverlässig abzustreifen.

Vorzugsweise ist die untere Kante des Abstreifabschnitts des Abstreifelements derart gebogen, dass der Abstand der unteren Kante des Abstreifabschnitts von der Lauffläche des Reifens des jeweiligen Rades in Axialrichtung des Rades und damit senkrecht zur Fahrtrichtung der Heuwerbungsmaschine konstant oder in etwa konstant ist. Auch diese Weiterbildung dient dazu, an der Lauffläche eines Reifens anhaftendes Erntegut im Bereich der unteren Kante des Abstreifabschnitts des Abstreifelements zuverlässig abzustreifen.

Vorzugsweise ändert sich ein Abstand zwischen der unteren Kante des Abstreifabschnitts und der oberen Kante des Abstreifabschnitts in Axialrichtung des Rades und damit senkrecht zur Fahrtrichtung der Heuwerbungsmaschine gesehen. Auch dies unterstützt das Abstreifen des Ernteguts von der Lauffläche eines Reifens eines Rades.

Vorzugsweise ist das Abstreifelement über einen Montageabschnitt desselben an einem Träger einer Radaufhängung montiert. Der Montageabschnitt ist derart gekrümmt, dass sich ein erster Teilabschnitt des Montageabschnitts, über welchen der Montageabschnitt am Abstreifabschnitt des Abstreifelements angreift, seitlich neben dem Rad erstreckt, und dass ein zweiter Teilabschnitt des Montageabschnitt, der am ersten Teilabschnitt angreift, in einem sich in Axialrichtung des Rades und damit senkrecht zur Fahrtrichtung der Heuwerbungsmaschine erstreckenden Querschnitt U-förmig konturiert ist, wobei sich dieser zweite Teilabschnitt in einen von einer Felge des jeweiligen Rades definierten Freiraum erstreckt und am Träger der Radaufhängung über mehrere, vorzugsweise zwei, insbesondere als Montageschellen ausgebildete Befestigungselemente montiert ist. Hiermit kann das Abstreifelement zuverlässig am Fahrwerk montiert werden.

Vorzugsweise kann der Abstand des Abstreifelements gegenüber dem Rad verändert bzw. für unterschiedliche Erntebedingungen angepasst werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen Ausschnitt aus einer Heuwerbungsmaschine,
- Fig. 2: ein Detail der Fig. 1,
- Fig. 3: ein Detail der Fig. 2.

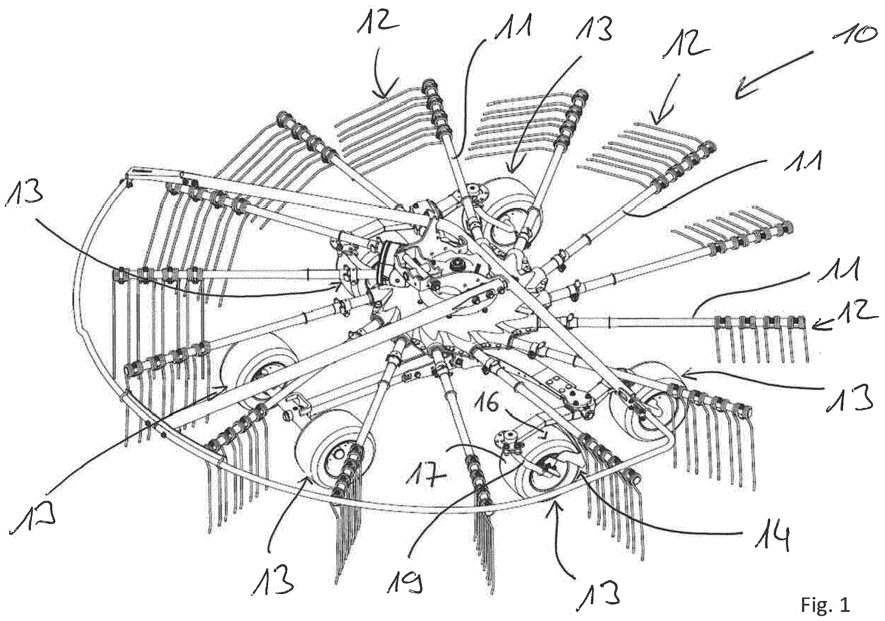

Fig. 1 zeigt einen Ausschnitt aus einer Heuwerbungsmaschine im Bereich eines Rechkreisels 10 derselben. Der Rechkreisel 10 verfügt über mehrere Zinkenarme 11, welche Rechzinken 12 aufnehmen. In einer Arbeitsstellung des in Fig. 1 gezeigten Rechkreisels 10 stützt derselbe sich über Tast- und Stützräder 13 auf einem zu bearbeitenden Untergrund ab.

Typischerweise ist der in Fig. 1 gezeigte Rechkreisel 10 über einen Auslegearm an einem Maschinengestell (nicht gezeigt) befestigt und kann um ein Klappgelenk relativ zum Traggestell zwischen einer Arbeitsstellung und einer Transportstellung verlagert werden. Das nicht gezeigte Traggestell stützt sich über ein ebenfalls nicht gezeigtes Fahrwerk, welches über Laufräder verfügt, auf einem zu bearbeitenden Untergrund ab.

Es sind auch Heuwerbungsmaschinen bekannt, die über kein separates Fahrwerk mit Laufrädern aufweisen.

Die Erfindung betrifft nun solche Details, die es verhindern, dass sich im Bereich eines Rades, insbesondere im Bereich eines der in Fig. 1 gezeigten Tast- und Stützräder 13, Erntegut ansammelt oder anhaften bleibt.

Die Erfindung kann an einem oder mehreren Tast- und Stützrädern 13 genutzt werden. Ferner kann die Erfindung auch im Bereich mindestens eines Laufrades des nicht gezeigten Fahrwerks zum Einsatz kommen.

Erfindungsgemäß ist mindestens einem Rad, und zwar im gezeigten Ausführungsbeispiel mindestens einem Tast- und Stützrad 13, ein Abstreifelement 14 zugeordnet.

Das Abstreifelement 14 weist einen Abstreifabschnitt 15 auf, der sich in Fahrtrichtung X der Heuwerbungsmaschine gesehen hinter dem jeweiligen Rad 13, nämlich hinter einer Lauffläche 16 eines Reifens 17 des Tast- und Stützrads 13, mit Abstand zur Lauffläche 16 erstreckt. Über den Abstreifabschnitt 15 des Abstreifelements 14 kann an der Lauffläche 16 des Reifens 17 anhaftendes Erntegut vom Reifen 17 abgestreift werden, um so zu verhindern, dass sich das Erntegut am Tast- und Stützrad 13 ansammelt und so dasselbe blockiert.

Das Abstreifelement 14 verfügt zusätzlich zum Abstreifabschnitt 15 über einen Montageabschnitt 18. Über den Montageabschnitt 18 ist das Abstreifelement 14 an einem Träger 19 einer Radaufhängung für das jeweilige Tast- und Stützrad 13 montiert.

Der Abstreifabschnitt 15 des Abstreifelements 14, der in Fahrtrichtung X der Heuwerbungsmaschine gesehen hinter dem jeweiligen Rad 13 angeordnet ist, verfügt über eine untere Kante 20 sowie über eine obere Kante 21. Ein Abstand der unteren Kante 20 des Abstreifabschnitts 15 des Abstreifelements 14 von der Lauffläche 16 des Reifens 17 des jeweiligen Rades 13 ist dabei kleiner als ein Abstand der oberen Kante 21 des Abstreifabschnitts 15 des Abstreifelements 14 von der Lauffläche 16 des Reifens 17 des jeweiligen Rades 13.

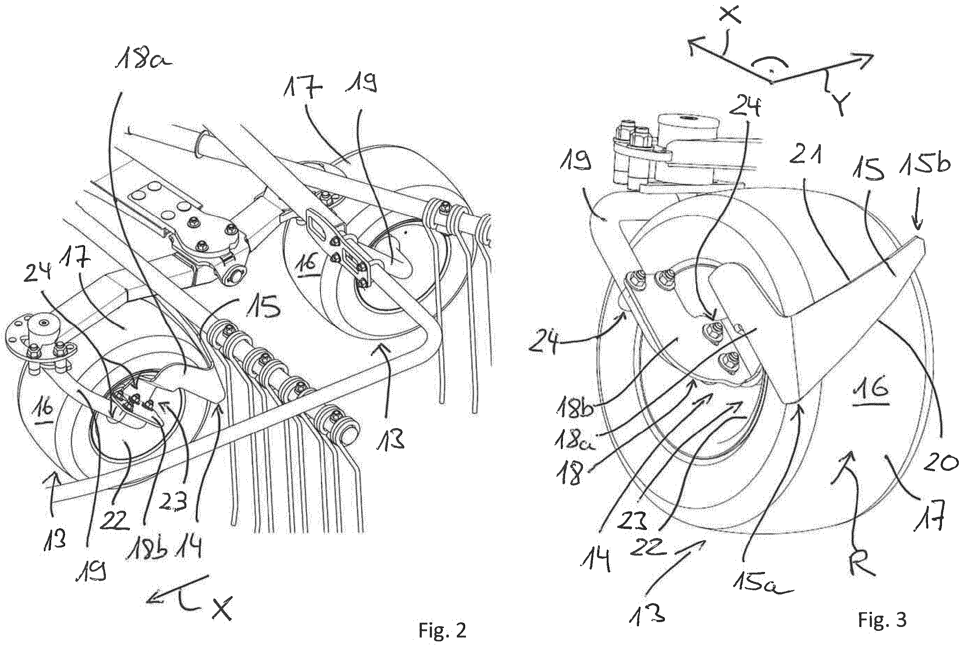

Bei Fortbewegung der Heuwerbungsmaschine in Fahrtrichtung X dreht sich das Rad 13 in Richtung des in Fig. 3 gezeigten Pfeils R, sodass Erntegut, welches im Bereich der Lauffläche 16 des Reifens 17 anhaftet, im Bereich der unteren Kante 20 zuverlässig abgestreift werden kann.

Vorzugsweise ist die untere Kante 20 des Abstreifabschnitts 15 des Abstreifelements 14 derart gebogen, dass in Axialrichtung Y des Rades 13 und damit senkrecht zur Fahrtrichtung X des Rades 13 gesehen, entlang der Erstreckung der unteren Kante 20 des Abstreifabschnitts 15 der Abstand derselben von der Lauffläche 16 des Reifens 17 konstant oder in etwa konstant ist.

In etwa konstant bedeutet, dass sich der Abstand der unteren Kante 20 des Abstreifabschnitts 15 von der Lauffläche 16 des Reifens 17 um maximal 10 %, bevorzugt um maximal 5 %, besonders bevorzugt um maximal 2 %, ändert. Hierdurch wird eine leicht ballige Kontur der Lauffläche 16 ausgeglichen, um über die gesamte Breite der Lauffläche 16 Erntegut zuverlässig abzustreifen.

Wie am besten Fig. 3 entnommen werden kann, ist das Abstreifelement 15 mit dem Montageabschnitt 18 an einem ersten seitlichen Ende 15a des Abstreifelements 15 verbunden. Ein gegenüberliegendes zweites seitliches Ende 15b des Abstreifabschnitts 15 ist frei.

In Axialrichtung Y des Rades 13 und damit senkrecht zur Fahrtrichtung X der Heuwerbungsmaschine gesehen verändert sich der Abstand zwischen der unteren Kante 20 und der oberen Kante 21 des Abstreifabschnitts 15, und zwar insbesondere derart, dass dieser Abstand ausgehend vom ersten seitlichen Ende 15a in Richtung auf das zweite seitliche Ende 15b kleiner wird, dass sich also der Abstreifabschnitt 15 vom ersten Ende 15a in Richtung auf das zweite Ende 15b desselben verjüngt.

Zumindest die untere Kante 20 des Abstreifabschnitts 15 des Abstreifelements 14 verläuft dabei, ausgehend vom ersten seitlichen Ende 15a in Richtung auf das zweite seitliche Ende 15b schräg von unten nach oben, also mit einem Anstellwinkel zur Horizontalen.

Auch die obere Kante 21 kann gegenüber der Horizontalen schräg verlaufen, wobei jedoch ein entsprechender Anstellwinkel der oberen Kante 21 gegen der Horizontalen geringer ist als ein entsprechender Anstellwinkel der unteren Kante 20 gegenüber der Horizontalen, sodass die beiden Kanten 20, 21 ausgehend vom ersten Ende 15a in Richtung auf das zweite Ende 15b divergieren und sich in dieser Richtung der Abstreifabschnitt 15 verjüngt.

Mit dem Abstreifabschnitt 15 des Abstreifelements 14 kann Erntegut, welches an der Lauffläche 16 des Reifens 17 des jeweiligen Rades 13 anhaftet, zuverlässig abgestreift werden, um so zu verhindern, dass sich Erntegut im Bereich des Rades 13 sammelt und so dasselbe blockiert, insbesondere im Bereich des Trägers 19, an welchem das Rad 13 bzw. der Reifen 17 mit geringem Abstand vorbeiläuft.

Wie bereits ausgeführt, ist das Abstreifelement 14 über einen Montageabschnitt 18 an einem Träger 19 einer Radaufhängung montiert.

Der Montageabschnitt 18 verfügt dabei über einen ersten Teilabschnitt 18a, der am Abstreifabschnitt 15 angreift und sich seitlich neben dem jeweiligen Rad 13 erstreckt. An diesen ersten Teilabschnitt 18a schließt sich ein zweiter Teilabschnitt 18b des Montageabschnitts 18 an, wobei dieser zweite Teilabschnitt 18b in einem sich in Axialrichtung Y des Rades 13 erstreckenden Querschnitt U-förmig konturiert ist. So erstreckt sich dieser U-förmig konturierte zweite Teilabschnitt 18b des Montageabschnitts 18 in einen von einer Felge 22 des jeweiligen Rades 13 definierten Freiraum 23 hinein und wieder aus demselben heraus, wobei ein vom ersten Teilabschnitt 18b abgewandter Schenkel des U-förmig konturierten zweiten Teilabschnitts 18b, wie am besten Fig. 3 entnommen werden kann, L-förmig konturiert ist.

Über diesen L-förmig konturierten Schenkel des im Querschnitt U-förmig konturierten zweiten Teilabschnitts 18b des Montageabschnitts 18 ist das Abstreifelement 14 an dem Träger 19 der Radaufhängung montiert, und zwar vorzugsweise über zwei als Montageschellen 24 ausgebildete Befestigungselemente. Die beiden Montageschellen 24 sind senkrecht zueinander orientiert und greifen an senkrecht zueinander verlaufenden Abschnitten des Trägers 19 der Radaufhängung an. So wird die Relativposition des Abstreifelements 14 relativ zum Rad 13 sicher fixiert.

Die Erfindung kann an jedem Rad einer Heuwerbungsmaschine zum Einsatz kommen, bei welcher die Gefahr besteht, dass sich an dem jeweiligen Rad Erntegut sammelt oder anhaftet und sich an einer in Drehrichtung nachfolgenden Engstelle verklemmt, wodurch das Rad gebremst oder blockiert wird. Bei dem Rad kann es sich sowohl um ein Tast- und Stützrad 13 eines Rechkreisels 11 als auch um ein Laufrad eines Fahrwerks der Heuwerbungsmaschine handeln.

Das Abstreifelement 14 mit seinen beiden Abschnitten, nämlich dem Abstreifabschnitt 15 und dem Montageabschnitt 18 ist vorzugsweise als abgewinkeltes, einstückiges bzw. monolithisches Blechbauteil ausgeführt.

Das erfindungsgemäße Abstreifelement 14 wird vorzugsweise in Drehrichtung des jeweiligen Rades 13 zwischen dem Radaufstandspunkt und einer Engstelle angeordnet, an welcher das Rad 13 bzw. der Reifen 17 mit nur geringem Abstand vorbeiläuft. Solche Engstellen entstehen beispielsweise an Radaufhängungen, Trägern 19 oder Halterungen und es besteht die Gefahr, dass sich das am Rad 13 anhaftende oder angesammelte Erntegut, wie z. B. Gras, dort aufstaut und zwischen Reifen 17 und einer Radaufhängung, einem Träger 19 bzw. einer Halterung o. ä. verklemmt und so zum Abbremsen oder Blockieren des Rades 13 führt.

### Bezugszeichenliste

- 10: Rechkreisel
- 11: Zinkenarme
- 12: Rechzinken
- 13: Tast- und Stützrad
- 14: Abstreifelement
- 15: Abstreifabschnitt
- 15a: Ende
- 15b: Ende
- 16: Lauffläche
- 17: Reifen
- 18: Montageabschnitt
- 18a: Teilabschnitt
- 18b: Teilabschnitt
- 19: Träger
- 20: Kante
- 21: Kante
- 22: Felge
- 23: Freiraum
- 24: Montageschelle

## Patentansprüche

1. Heuwerbungsmaschine,
mit Rädern, nämlich zumindest mit Tast- und Stützrädern (13) von Rechkreiseln (10), **dadurch gekennzeichnet, dass**
mindestens einem Rad (13) ein Abstreifelement (14) zugeordnet ist, welches einen Abstreifabschnitt (15) aufweist, der in Drehrichtung des Rades (13) vor einer Engstelle angeordnet ist, an welcher sich das Rad (13) bzw. der Reifen (17) mit geringem Abstand vorbeidreht.

2. Heuwerbungsmaschine nach Anspruch 1, **dadurch gekennzeichnet, dass** das Abstreifelement (14) über einen Montageabschnitt (18) desselben an einem Träger (19) einer Radaufhängung des jeweiligen Rades (13) montiert ist.

3. Heuwerbungsmaschine nach Anspruch 1 oder 2, **dadurch gekennzeichnet, dass** der Abstreifabschnitt (15) eine untere und obere Kante (20, 21) aufweist, wobei ein Abstand der unteren Kante (20) des Abstreifabschnitts (15) von der Lauffläche (16) des Reifens (17) des Rades (13) kleiner ist als ein Abstand der oberen Kante (21) des Abstreifabschnitts (14) von der Lauffläche (16).

4. Heuwerbungsmaschine nach Anspruch 3, **dadurch gekennzeichnet, dass** die untere Kante (20) des Abstreifabschnitts (15) des Abstreifelements (14) derart gebogen ist, dass der Abstand der unteren Kante (20) des Abstreifabschnitts (14) von der Lauffläche (16) des Reifens (17) des jeweiligen Rades (13) in Axialrichtung des Rades (13) und damit senkrecht zur Fahrtrichtung der Heuwerbungsmaschine sich um maximal 10%, bevorzugt um maximal 5%, besonders bevorzugt um maximal 2%, ändert.

5. Heuwerbungsmaschine Anspruch 3, **dadurch gekennzeichnet, dass** die untere Kante (20) des Abstreifabschnitts (15) des Abstreifelements (14) derart gebogen ist, dass der Abstand der unteren Kante (20) des Abstreifabschnitts (14) von der Lauffläche (16) des Reifens (17) des jeweiligen Rades (13) in Axialrichtung des Rades (13) und damit senkrecht zur Fahrtrichtung der Heuwerbungsmaschine gesehen konstant ist.

6. Heuwerbungsmaschine nach einem der Ansprüche 3 bis 5, **dadurch gekennzeichnet, dass** sich ein Abstand zwischen der unteren Kante (20) des Abstreifabschnitts (15) und der oberen Kante (21) des Abstreifabschnitts (15) in Axialrichtung des Rades (13) und damit senkrecht zur Fahrtrichtung der Heuwerbungsmaschine gesehen ändert.

7. Heuwerbungsmaschine nach Anspruch 2 und 6, **dadurch gekennzeichnet, dass** sich der Abstand zwischen der unteren Kante (20) des Abstreifabschnitts (15) und der oberen Kante (21) des Abstreifabschnitts (15) derart ändert, dass sich der Abstreifabschnitt (15) ausgehend von einem ersten seitliche Ende (15a), an welchem der Montageabschnitt (18) des Abstreifelements (14) am Abstreifabschnitt (15) desselben angreift, in Richtung auf einen gegenüberliegendes zweites seitliches, freies Ende (15b) des Abstreifabschnitts (15) verjüngt.

8. Heuwerbungsmaschine nach Anspruch 7, **dadurch gekennzeichnet, dass** zumindest die untere Kante (20) vom ersten seitlichen Ende (15a) in Richtung auf das zweite seitliche Ende (15b) schräg von unten nach oben verläuft.

9. Heuwerbungsmaschine nach einem der Ansprüche 2 bis 8, **dadurch gekennzeichnet, dass** der Montageabschnitt (18) derart gekrümmt ist, dass sich ein erster Teilabschnitt (18a) des Montageabschnitts (18), über welchen der Montageabschnitt (18) am Abstreifabschnitt (15) des Abstreifelements (14) angreift, seitlich neben dem Rad (13) erstreckt, und dass ein zweiter Teilabschnitt (18b) des Montageabschnitt (18), der am ersten Teilabschnitt (18a) angreift, in einem sich in Axialrichtung des Rades damit senkrecht zur Fahrtrichtung der Heuwerbungsmaschine erstreckenden Querschnitt U-förmig konturiert ist, wobei sich dieser zweite Teilabschnitt (18b) in einen von einer Felge (22) des jeweiligen Rades (13) definierten Freiraum (23) erstreckt und am Träger (19) der Radaufhängung über mehrere, vorzugsweise zwei, Befestigungselemente montiert ist.

10. Heuwerbungsmaschine nach Anspruch 9, **dadurch gekennzeichnet, dass** die Befestigungselemente Montageschellen (24) sind.
